# EUROPEAN PATENT APPLICATION

(11) **EP 1 179 604 A2**
(43) Date of publication of application: **13.02.2002**
(21) Application number: 00125019.0
(22) Date of filing: 16.11.2000
(51) Int. Cl.: C22B 3/18, C22B 11/00

(54) **Method of extracting metals from minerals by bioleaching**

(30) Priority: 10.08.2000 RU 2000120926
(71) Applicant: Firma BIOMEDY AG, 6300 Zug (CH)
(72) Inventor: Chouguina, Galina, Moscow (RU)
(74) Representative: Baronetzky, Klaus, Dipl.-Ing.

(57) **Abstract**

Using: leaching of metals from minerals.

Essence of the invention: mineral raw materials were leached in presence of a leaching agent. A biomass of microorganisms with heterotrophic type of metabolism grown in a nutrient medium was used as a leaching agent. The microorganisms were selected from natural materials. Leaching was carried out with consumption of biomass not less than 3·10⁻³ kg on 1 kg of mineral row material. Acetic bacteria, pseudomonas, sulfuric bacteria were used as microorganisms with heterotrophic type of metabolism.

A water solution of higher carbohydrate polymers was used as a nutrient medium. A mineral additive was additionally introduced into the nutrient medium, and phosphate of ammonia, ammonium chloride or mixture thereof, or sodium chloride was used as the mineral additive.

Vegetal remains, sawdust, cane, sedge, household wastes were used as the higher carbohydrate polymers.

## Description

The present invention relates to the area of leaching of metals including gold and silver from minerals and can be used in mining and other industries.

It is known a method of extraction of metals from minerals including leaching by autotrophic acidophilic microorganisms *Thiobacillus ferrooxidans* with subsequent cyanidation of leaching products (see Design and operation of a commercial bacterial oxidation plant at Fairview/Tub Asweden P.C., Marais H.Y., Haines A.K. Marshalltown, 1988, 12 p.).

Disadtubtage of this method is its low degree of extraction and toxicity of the process.

It is known a method of extraction of metals from minerals including leaching by microorganisms *Thiobacillus ferrooxidans* in reactive tubs and sorption cyanidation in presence of activated charcoal (see Mining Journal, 1990. V. 314 No.8068 p. 335-337).

Disadtubtage of this method is its low degree of extraction of metals because of presence in the ore of carbonaceous minerals composed by rocks of mainly non-silicate composition. When minerals contain more than 1% of carbonates it is necessary to additionally enter sulfuric acid into the medium to provide oxidation of sulfide minerals by carbothionic bacteria. The latter sharply reduces profitability of the bioprocess. Besides, the technological process still uses toxic cyanide dissolvent.

The closest to the proposed is a method of extraction of metals from ores including leaching with use as a leaching agent of aqueous extract of vegetative residues (see Russian Federation Patent No.2059005, publ. Apr. 27, 1996).

Its disadtubtage is low degree of extraction of metals and duration of the process, as autochthonous microflora (microorganisms living in the given kind of minerals) develops at use of the aqueous extract of vegetative residues among which there are microorganisms not participating in extraction of metals, and metals selective microflora is not enough to provide industrial degree of extraction of metals. Besides, development of autochthonous microflora is accompanied by long period of time and creation of favorable conditions for development thereof.

The present invention provides rising the degree of extraction of metals from minerals, including difficultly processed raw material.

In order to achieve this technical result a biomass of microorganisms with chemo-organotrophic type of exchange grown in a nutrient medium being used as a leaching agent in a method of extraction of metals from minerals including leaching of metals.

Microorganisms with chemo-organotrophic type of exchange being selected from natural materials.

Leaching being carried out with consumption of biomass not less than 3 · 10⁻³ kg on 1 kg of mineral row material.

Acetic bacteria, pseudomonades, sulfuric bacteria being used as microorganisms with chemo-organotrophic type of exchange.

A water solution of higher carbohydrate polymers being used as a nutrient medium.

A mineral additive being introduced into the nutrient medium.

Phosphate of ammonia, ammonium chloride or mixture thereof, or sodium chloride being used as the mineral additive.

Vegetative residues, sawdust, cane, sedge, household wastes being used as the higher carbohydrate polymers.

Characterizing features of the proposed method are the use as a leaching agent of a biomass of microorganisms with chemo-organotrophic type of exchange grown in the nutrient medium. The microorganisms with chemo-organotrophic type of exchange form with metals stable water-soluble chelate compounds in wide pH range of the medium (from acidic to alkalescent) and provide combined effect on metals of minerals due to symbiotic links (each of the present microorganisms - symbiotes - benefit to another, that raises degree of extraction of metals into solution).

### Example 1.

The wastes of pyrites enrichment were exposed to leaching.
Chemical composition, %:
Au - 0.0003105; Fe - 22.3; P- 0.02; Cr- 0.08; Cu - 0.1; Zn - 0.3;
Ag - 0.00212; Ca- 0.92; Si - 18.79; Al - 2.12; Na - 0.4; Ti - 0.13;
K - 0.55; As - 0.1
Mineralogical composition, %:
Pyrite - 55, quartz - 27, the rest is presented by feldspar, sericite chlorite, calcite.

The wastes of pyrite enrichment were leached by heap method - lixiviating solution being filtered through motionless crushed mining mass in a column at heap leaching of metals from minerals.

The leaching plant comprised a polyvinyl chloride plastic column with false bottom covered by fiber glass fabric layer to hold ore not falling through. In the bottom part the column being provided with a drain tap.

| Leaching conditions: | |
|---|---|
| Ore specimen | 1 kg |
| Crushing | -2 + 0.5 mm |
| Temperature | 22 -23°C |
| Aeration | natural |
| Liquid to solid ratio | 0.3 |
| Watering | daily |
| Duration | 2 months |

| Physical parameters of the ore: | |
|---|---|
| Specific gravity | 4.8 ton/m³ |
| Volume weight | 1.58 ton/m³ |
| Porosity | 0.24 |
| Moisture capacity | 24% |
| Factor of filtration | 1.69 m/day |

The leached wastes of pyrites enrichment were placed layerwise in the column. Each layer was wetted by biomass of microorganisms with chemo-organotrophic type of exchange. Given microorganisms were selected from natural material and grown in a nutrient medium of higher carbohydrate polymers. Biomass of microorganisms was obtained in result. The leaching agent comprised an aqueous medium (pH 7.2) with following composition, %:
Dry vegetative residues - 2.5, ammonium phosphate double substituted - 0.03, biomass of microorganisms with chemo-organotrophic type of exchange - 1 % to the volume of lixiviating solution. Consumption of the biomass was 4 · 10⁻³ kg on 1 kg of wastes of enrichment of pyrites.

The mining mass was watered daily at the rate of 40 liters on 1 M² within 60 days. Value of pH, chemical and microbiological analyses were systematically monitored in drain solutions. After completing of the tests contents of metals was determined and material composition was analyzed in each layer.

Table 1 represents the results of extraction of metals into solution.

**Table 1**

| | Extraction, % | | | |
|---|---|---|---|---|
| Layer | Au | Ag | Zn | Cu |
| 1 | 70 | 96 | 63 | 48 |
| 2 | 71 | 99 | 60 | 45 |
| 3 | 74 | 97 | 67 | 47 |

Table 2 represents comparative data on change of material composition of the wastes of pyrite enrichment after heap leaching of metals.

**Table 2**

| Components | Initial ore, % | Rest of the ore after leaching, % |
|---|---|---|
| Pyrite | 55 | I layer -not present |
| | | II layer- 2.5 |
| | | III layer - 3 |
| Chalcopyrite, cubanite | 1.5 | not present |
| Blende, galena | 0.8 | not present |
| Barite | 8 | 4.5 |
| | | 0 |
| Quartz | 27 | I layer - 76 |
| | | II layer - 85 |
| | | III layer - 76 |
| Muscovite, hydromica | 2 | I layer - 9 |
| | | II layer - 5 |
| | | III layer - 8 |
| Feldspars | 3 | I layer - 10.5 |
| | | II layer - 7 |
| | | III layer - 8 |
| Clayey minerals | <0.5 | 1 |
| Sulfates | <0.5 | 3 |

Transfer of metals into solution was caused by the plurality of following reactions:
- complexation with metastable products of pyrite oxidation by: sulfite-thiosulfate-ions[Au(SO₃)₂³⁻, Au(S₂O₃)₂³⁻];
- forming of chelate compounds of metals with microbial metabolites;
- forming of chelate compounds with humus acids of the leaching agent.

It should be also taken into account, that besides the alive bacterial cells and their metabolites, there are present lifeless, i.e. organic components (amino acids) coming into medium in process of destruction of the latter, which are potential complexing agents.

### Example 2.

Quartz-tinstone-sulfide ores were leached by vat leaching method.
Chemical composition, %:
Ag - 0.0078; Zn - 2.0; Cd - 0.1; Ti - 1.0; Fe - 10.37
As - 0.8; Si - 28.1; Mg - 0.36; Ca - 0.09; Na - 0.03
K - 2.4; Sn - 0.3; In-0.05
Mineralogical composition, %:
Pyrite - 30, pyrrhotine - 2, arsenopyrite - 1, tinstone - 1, blende - 4, stannite - 2, sulphosalts of silver, tin, lead - 2, rockforming minerals were presented by quartz, tourmaline, alephibol, chlorite, muscovite.
Initial conditions of the process of leaching:
   18 kg of ore with dimension of particles of 0.15 mm was loaded through the hatch in a tub with working capacity of 180 liters. 162 liters of leaching agent - biomass of microorganisms with chemo-organotrophic type of exchange - was loaded into the tub. The solid to liquid ratio was 1:10. The process was conducted at T = 23°C under aerobic conditions, which were provided by agitating the pulp without additional aeration. The agitating was carried out with the help of a mechanical agitator with rate of 150 rev/min. Duration of agitating of the pulp was 10 hours a day. Solution settled during the night was merged, and a new portion of a leaching agent was introduced into the pulp, keeping the same initial ratio. The productive solutions were analyzed. Duration of the leaching in agitating periodic mode was 22 days.

Table 3 represents the results of extraction of metals into solution.

**Table 3**

| Extraction, % | | | | | |
|---|---|---|---|---|---|
| Ag | Zn | Sn | Cd | In | As |
| 85 | 50 | 50 | 70 | 70 | 70 |

Analysis of the material composition of the rest after leaching showed absence of blende (zinc mineral) present in the initial sample. Residues of arsenopyrite (arsenic mineral) were found in form of eroded grains in result of bacterial leaching. Stannite (tin mineral) had corroded appearance, essential differences were revealed in comparison with stannite of initial ore:
stannite of initial sample, %: Cu-30; Fe-13; Sn-27.6; S-29.8; As-0.2
stannite after bioleaching, %: Cu-27; Fe-15; Sn-23.5; S-27; As-0.05

These data indicate leaching of tin. Argentiferous minerals were not found in the rests, even in relics.

### Example 3

Ore of a deserted copper mine was undergone underground leaching.
Chemical composition of the ore, %:
SiO₂-22.62; Al₂O₃-0.43; Fe-34.4; Ca-0.1; Cu-3; Zn-1; K-0.2; Na-0.2.
Mineralogical composition of the ore, %:
   Pyrite-60; minerals of copper: chalcopyrite- 8-10; covellite, cubanite, cuprite, boxnite, malachite, native copper - about 1 %, quartz - 24.
   The upper zone of the deposit was presented by oxidated ores, the middle zone - by ores of secondary enrichment, the third zone - by sulfides which contain chalcopyrite and pyrite.
   A mass explosion crushed 400,000 tons of ore and 200,000 tons of containing rocks. Such explosion exposed at slope the split ore where terraces were formed of height of 6.1 m and width from 4.6 to 55 m. The average size of pieces was 230 mm.
   A biomass of microorganisms with chemo-organotrophic type of exchange was used as leaching agent grown in a nutrient medium - water solution of higher carbohydrate polymers with mineral additive - sodium chloride. The leaching agent in quantity of 3 · 10⁻³ kg on 1 kg of ore was fed by pumps on two pipelines having diameter of 150 mm and throughput of 3.785 m³/min to the top of the slope, whence it was fed by distributive pipeline with diameter of 51 mm, having spraying nozzles in every 12.2 m for watering of the surface of terraces. Each nozzle watered the surface of 18.3 M3, and the total watered area comprised 75 thousand m². The lixiviating solution had pH 7.2. The interval between watering was kept within 3 months. During this period, action of microorganisms, products of their metabolism, components of water solution of the medium (leaching agent) and oxygen of air caused leaching of copper, thus iron and zinc also passed into the solution. The copper-bearing solutions after seepage through the split mining body by gravity flow into excavation located in the bottom part of the career, whence they were pumped out to the surface through an operational well. Contents of the copper in productive solutions comprised 1-1.5 g/l.

The productive solution was fed to a storage container, whence by pipeline at feeding rate of about 4 m³/min it was fed to the vessel for productive solutions, and then to the grout chamber for extraction of copper from the solution.

Table 4 represents the results of extraction of metals into solution.

**Table 4**

| Extraction, % | | |
|---|---|---|
| Cu | Zn | Fe |
| 80 | 82 | 95 |

It was experimentally established, that consumption of biomass of microorganisms with chemo-organotrophic type of exchange at leaching was not less than 3 · 10⁻³ kg on 1 kg of minerals. At consumption of biomass less than 3 · 10⁻³ kg on 1 kg of minerals degree of extraction of metals decreases, since the quantity of evolved products of metabolism was not enough for transition thereof into solution.

The proposed method of extraction of metals from minerals allows to increase the degree of extraction of metals and to reduce duration of process of leaching.

## Claims

1. A method of extraction of metals from minerals including leaching of metals with use of a leaching agent, **characterized in that** a biomass of microorganisms with heterotrophic type of metabolism grown in a nutrient medium being used as a leaching agent.

2. A method according to claim 1, **characterized in that** the microorganisms with heterotrophic type of metabolism being selected from natural materials.

3. A method according to claim 1, **characterized in that**, the leaching being carried out with consumption of biomass not less than 3 · 10⁻³ kg on 1 kg of mineral row material.

4. A method according to claim 1, **characterized in that** acetic bacteria, pseudomonades, sulfuric bacteria being used as microorganisms with heterotrophic type of metabolism.

5. A method according to claim 1, **characterized in that** a water solution of higher carbohydrate polymers being used as a nutrient medium.

6. A method according to claim 1, **characterized in that** a mineral additive being additionally introduced into the nutrient medium.

7. A method according to claim 6, **characterized in that** phosphate of ammonia, ammonium chloride or mixture thereof being used as the mineral additive.

8. A method according to claim 6, **characterized in that** sodium chloride being used as the mineral additive.

9. A method according to claims 1, 5, **characterized in that** vegetal remains, sawdust, carie, sedge, household wastes being used as the higher carbohydrate polymers.
